(19) Europäisches Patentamt
European Patent Office
Office européen des brevets

(11) **EP 2 432 132 A1**

(12) **EUROPEAN PATENT APPLICATION**

(43) Date of publication:
**21.03.2012 Bulletin 2012/12**

(51) Int Cl.:
*H04B 1/709* [(2011.01)]

(21) Application number: **11181672.4**

(22) Date of filing: **16.09.2011**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br><br>(30) Priority: **17.09.2010 EP 10177353**<br><br>(71) Applicant: **Technische Universität Dresden**<br>**01069 Dresden (DE)** | (72) Inventors:<br>• **Finger, Adolf**<br>  **01737 Kurort Hartha (DE)**<br>• **Lu, Yun**<br>  **01705 Freital (DE)**<br><br>(74) Representative: **Lippert, Stachow & Partner**<br>**Patentanwälte**<br>**Krenkelstrasse 3**<br>**01309 Dresden (DE)** |

(54) **Method and apparatus for correlation detection in broadband positioning systems**

(57) A receiver arrangement and method is provided for correlation detection in CDMA based communication and navigation systems. The receiver arrangement comprises a multi-correlation receiver (MCR) with a number of branches, each of which generates a different new code sequence from the received code by multiplying the original code with one or more chip delayed version(s) thereof, and determines correlation functions from the new code sequence, and further comprises an adder for combining all the correlation functions from all braches. The receiver arrangement realizes an optimum trade-off for effectively suppressing Inter Symbol Interference and Near-Far effect while obtaining reasonable output SNRs.

Fig. 10

EP 2 432 132 A1

## Description

The present invention relates to a method of correlation detection in CDMA based communication and navigation systems and also relates to an apparatus for performing same.

## Background of the Invention

Multipath, Multiple Access Interference (MAI) and Near-Far effect are three main influences on the performance of Code Division Multiple Access (CDMA) based communication and navigation systems. A great deal of research has been conducted to develop advanced signal processing algorithms and novel receiver structures useful for mitigation of these effects in wireless communication systems such as UMTS. One simple and effective way of dealing with multi-user interference in CDMA systems is to employ Successive Interference Cancellation (SIC), especially under severe Near-Far effect conditions, which is also the case for ultrasonic indoor location systems. However, the difficulty in performing SIC for ultrasonic indoor location systems is to accurately estimate the amplitude of the signal to be cancelled which is dependent on the transmitter's location and orientation and is not directly known. Alternative methods allow the signal amplitude to be estimated based on correlation properties. Therefore, a sufficient signal-to interference-noise ratio (SINR) is needed at the correlator output for an accurate estimation of the MAI amplitude.

In the past 15 years, there has been an increasing research focus on developing systems which can perform location sensing. Positioning data of nodes can be used in wireless network deployments to improve dynamic routing or to allow location-stamping of sensor data. By additionally tracking users, location systems also enable a diverse range of context-aware applications, allowing devices to more effectively serve the people using them.

The Global Positioning System (GPS) allows mobile receiver units to compute their position by measuring radio signal's time of flight (ToF) from satellites. Typical accuracies are within a few meters, but GPS performance is seriously hampered indoors. To deal with this problem, a number of systems have been proposed for indoor location purposes, such as WLAN location, dedicated Radio Frequency (RF) location, Ultra-wideband (UWB) systems and ultrasonic location systems. Ultrasonic location systems are considered to be a promising approach for fine-grained and low cost indoor systems. Several previous works used encoding of an ultrasonic signal to implement advanced sensors in robotics, by using pseudo random sequences, Barker codes, or Golay codes. The first study of indoor ultrasonic location systems was about Bats and Crickets systems at the Massachusetts Institute of Technology (MIT). However, these systems were narrow band systems, i.e. with a signal bandwidth <5 kHz, which results in many disadvantages. Hazas has been the first one using Gold codes in wideband (bandwidth > 20 kHz) ultrasonic location systems for multiple access conditions, see H. Mike; W. Andy "A novel broadband ultrasonic location system". Proceedings of UbiComp 2002: 4th International Conference on Ubiquitous Computing. Goteborg, Sweden Sept. 2002. pp. 264-280. Later, there have been also many other wideband ultrasonic location systems based on the same principle in terms of the applications of new codes and further development of ultrasonic transducers.
Just like other systems the ultrasonic indoor location systems have their important parameters describing the system performance, namely the probability of detection and the ranging accuracy of the system.

As is known in the art, ToF estimation can be obtained by direct correlation maximization to find and estimate the true position of the signal arrival. The variance of the time-of flight (ToF) standard deviation is given by:

$$\sigma(TOF) \geq \frac{1}{F_e \sqrt{SNR}} \tag{1}$$

where $F_e$ is the effective bandwidth of the signal. Expression (1) suggests that by increasing the effective signal bandwidth and/or increasing the SNR, the ToF variation decreases. If the effective bandwidth is constant, the only way to decrease the ToF variation according to (1) is to increase the SNR. For ultrasonic location systems based on matched filter, ranging signals are desired which exhibits good properties for both auto-correlation (AC) function and cross-correlation (CC) function, to suppress Inter Symbol Interference (ISI) and Multiple Access Interference (MAI). Therefore, the effectiveness of Direct-Sequence Code Division Multiple Access (DS-CDMA) ultrasonic systems strongly depends on the Spread Spectrum (SS) codes that codify the ultrasonic emissions. Unfortunately, sequences which have both optimal good CC values and AC side lobes do not exist in nature. Sarwate et al. gave a theoretical bound between CC values and AC side lobes of sequences based on conventional matched filter, see M. B. Pursley and D. V. Sarwate, "Evaluation of correlation parameters for periodic sequences" IEEE Trans. Inf. Theory, vol. 23, no 4, pp 508-513, 1977. According to recent research, the Loosely Synchronous (LS) codes exhibit optimal aperiodic correlation properties but only within a limited window, the so called Interference Free Window (IFW), see e.g. Zepernick, H. J.; Finger A. "Pseudo random Signal processing", Applications of pseudo random signal processing, Wiley-Verlag, 2005, pp. 225-313. Because of the relative long construction of LS codes for a sufficiently large IFW and long waiting pause for aperiodic correlation, the LS codes are not so favorable in terms of large range and high update rate. When a large number of MAI signals is received with almost equal power levels, MAI appears to be Gaussian according to the Central Limit Theorem, and almost white within the band of interest. Thus, the conventional receivers may approach their optimal performance. Unfortunately, for indoor ultrasonic systems only a moderate number of MAI signals are received simultaneously especially in Polled-Centralized Location systems, and furthermore the signal power levels are mostly not the same. In this case multi-user detection, e.g. SIC, is an effective approach and is usually applied. However, the performance of SIC strongly depends on the accurate estimation of the received signal amplitude, which can only be obtained from correlation in our case. Thus, a high correlator output SINR plays a major role for the detection of signals and for system accuracy.

More recently, Y. Lu and A. Finger "Ultrasonic Beacon-Based Local Position System Using Broadband PN (Pseudo Noise)-Chirp Codes", The 9th IASTED International Conference on Wireless and Optical Communications, Canada, 2009, introduced flexible PN codes (codes with intervals between sequence chips) combined with Chirp pulses as an ultrasonic coding to meet the requirements of indoor positioning in terms of accuracy and against great dynamic. PN-Chirp codes show great flexibility and stability, and the sequence length can be adjusted depending on channel properties to reduce both ISI and MAI interference. An inclusion of intervals in PN codes and a combination of Chirp pulses have many advantages over traditional PN codes which are based on rectangular pulses, as listed below:

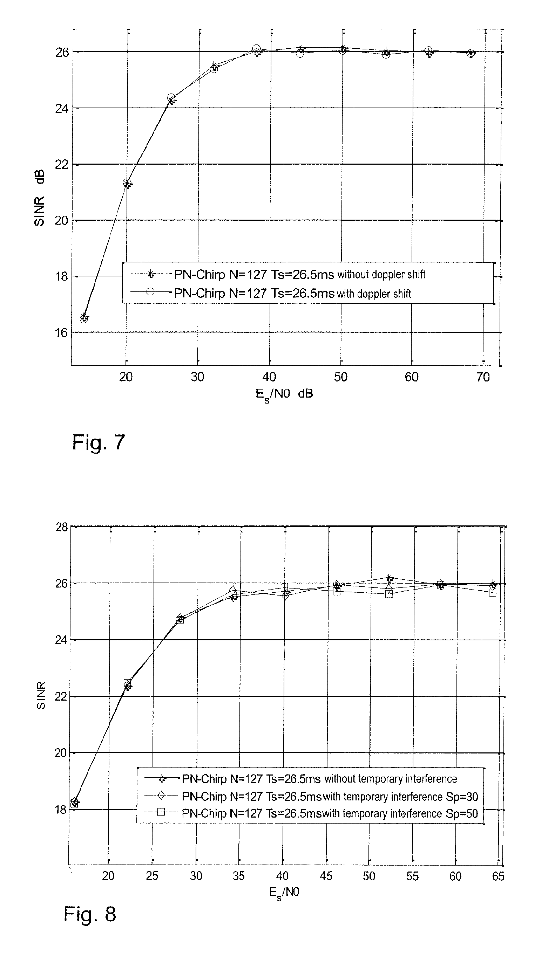

1. Reducing the average ISI and MAI interference due to intervals between chips, although they are active simultaneously.
2. Highly accurate estimation of MAI amplitude is not always necessary while not all the MAI have really influence on the desired signal.
3. The introduced intervals provide much margin for a better design of pulses (Chirp pulses) achieving more signal bandwidth since increasing the signal bandwidth can reduce the ToF variation more rapidly.
4. Robust against broadband interference by using Chirp pulses (Fig. 8 illustrates the signal to interference and noise ratio (SINR) under broadband interference for 5 users and with Sp normalized amplitude on the signal).
5. Robust against Doppler Effect and achieving fast signal acquisition in dynamic case (Fig. 7 shows the SINR for PN-chirp codes under Doppler Effect with $f_{max}$=235 Hz for 5 uers).

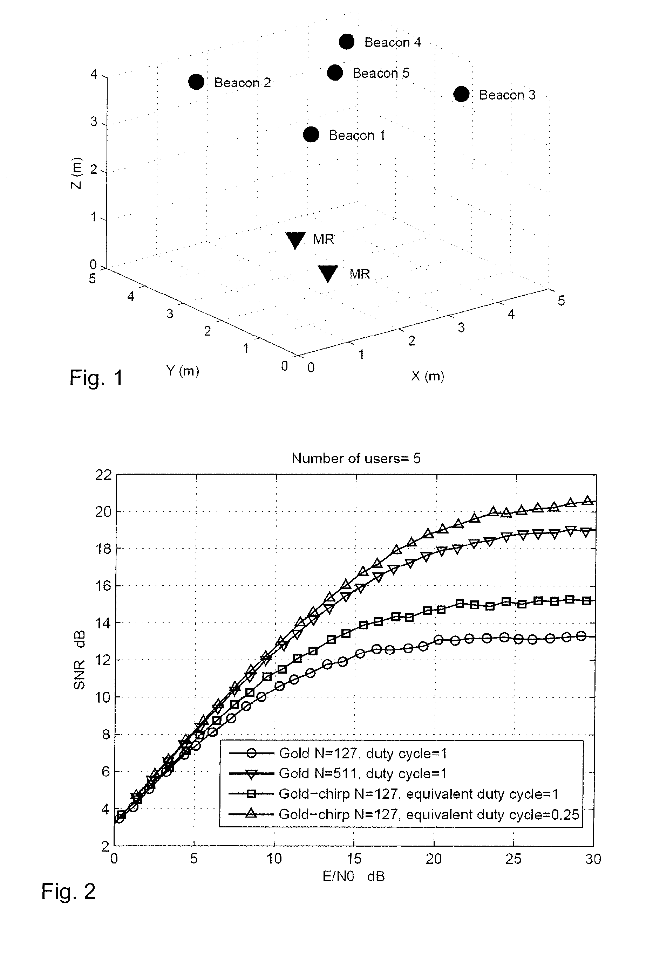

By assuming mobile robots (MR) as transmitters in the environment and beacons on a ceiling as receivers which is known as Polled-Centralized mode and illustrated in Fig. 1 the SNR at the output of a correlator by using flexible PN codes can be given by:

$$\text{SINR} \approx \left\{ \frac{2\gamma}{h_{i0}^2} \left\{ \sum_{j=1}^{m} h_{ij}^2 \frac{1}{3N} + \sum_{j=0}^{n} h_{kj}^2 \frac{K-1}{3N} \right\} + \frac{N_0}{2E h_{i0}^2} \right\}^{-\frac{1}{2}} \tag{2}$$

where $\gamma$ is the transmit duty cycle, $h_{ij}$ is the channel response coefficient, K is the number of active users, $N$ is the sequence period, and $N_0$ is the spectral power density of white noise. For PN-Chirp codes, one can obtain a similar result but with a modified transmit duty cycle based on the assumption that due to signal reflection from objects and multiple access conditions from other users all ISI and MAI is uniformly distributed over the signal sequence duration. One can readily notice that the output SINR is dependent on the transmit duty cycle $\gamma$, sequence period $N$, the total number of users K, and of course the input SNR $E/N_0$. According to these considerations we obtain the graphs of Fig. 2.

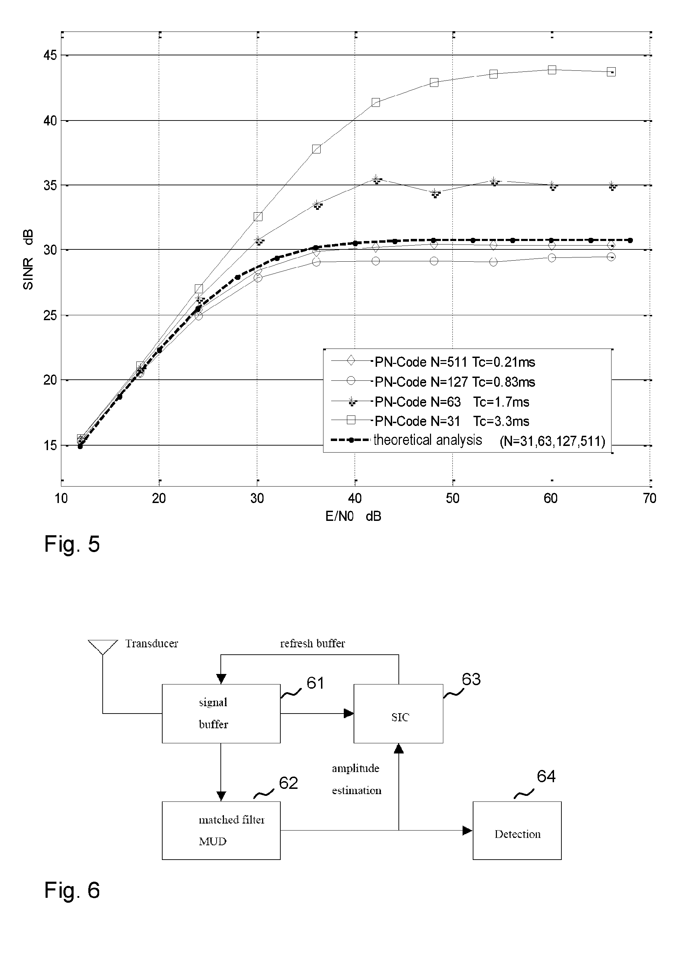

Additionally, the combination of flexible PN codes and Chirp pulses is more important in case of non-ideal MAI behavior, as mentioned before. By adjusting the transmit duty cycle appropriately, thus, the conventional matched filter can still be used in this scenario and could also be considered as approximately optimal. Fig. 6 illustrates a traditional receiver implementation for ultrasonic indoor location systems, as including an input buffer 61, a Multi-User Detection (MUD) unit 62 based on a matched filter approach, a SIC 63 feedback loop; and detection unit.

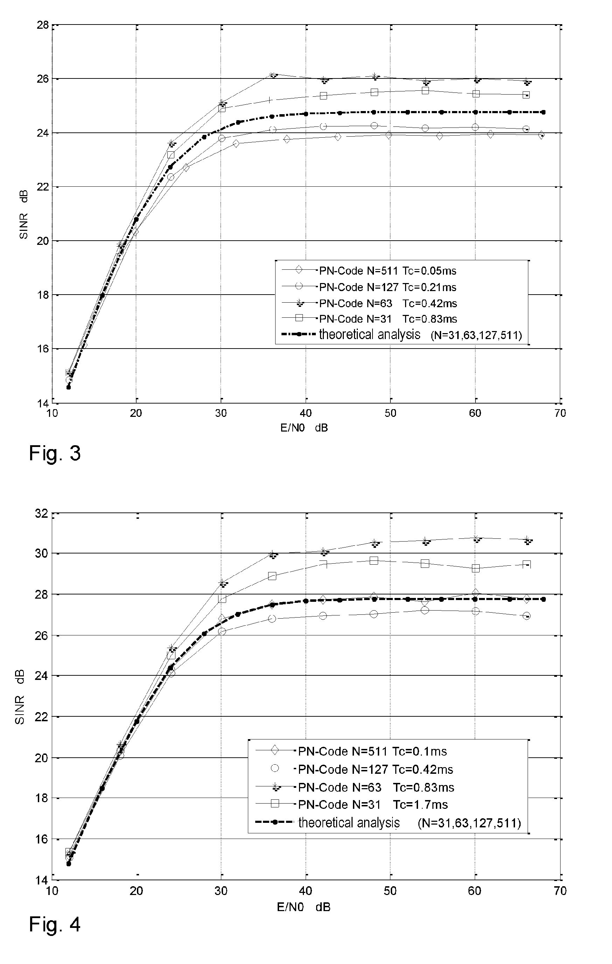

From Fig. 2 it can be seen that it is not necessary to use the code sequence with a long period, e.g. N=511, rather, a better output SNR and system update rate can be achieved with a relatively short period, e.g. N=127, by changing the transmit duty cycle. In practice, the system update rate can be reduced for slow-moving objects with better accuracy, or the update rate can be increased for fast-moving objects with normal accuracy. This can be simply realized by scaling the chirp duration. In reality the channel differs from the channel model we assumed here. Echo components and multi-user interferences are not uniformly distributed over the sequence duration. In these situations, flexible PN codes have more advantages over traditional long sequences. This can be seen in Figs. 3 to 5, wherein Fig. 3 shows the system performance without SIC for a sequence duration of 26.5 ms and 5 users; Fig. 4 shows the system performance without SIC for a sequence duration of 52 ms and 5 users; and Fig. 5 shows system performance without SIC for a sequence duration of 105 ms and 5 users. Sequences with relatively long periods (e.g. N=127, N=511) always perform a little worse than the theoretic line from equation (2). In contrast, sequences with relatively short periods (e.g. N=31, N=63) which have longer intervals in the sequences than that with long periods, give reasonable performances above the theoretical line. Especially in case of sequence duration T=105 ms, the output SNR from Gold 31 exhibits great enhancement over its counterparts. Regarding the practical implementation of flexible PN codes, the sequences with relatively short periods are usually used as ranging codes, since long periods (favorable detection) and long intervals (reasonable output SINR) simultaneously will result in long sequence duration, which are of course not favorable in terms of system update rate. However, according to the simulation results in a real channel model the intervals have more contribution for improving the SINR than that by increasing the sequence periods. Based on this fact we can utilize the sequences with long intervals with respect to better output SINR, which are also required for better pulses design, combing with short period PN sequences, if the total sequence duration is limited. However, a tradeoff between reasonable output SINR and favorable detection must be made in performing SIC because the PN sequences with short periods suffer from bad correlation properties, which will deteriorate the signal detection in SIC.

What is needed, therefore, is a way to effectively suppress Inter-Symbol-Interference (ISI) and MAI (Near-Far effect) while obtaining reasonable output SINR.

## Summary of the Invention

To deal with this problem, the invention provides a novel Multi-Correlation Receiver (MCR) structure which is based on a novel Delay-and-Multiply (DAM) approach.

According to the invention, there is provided a receiver arrangement for detection of correlation of Code Division Multiple Access (CDMA) receive signals which comprise spread spectrum codes, wherein the receiver arrangement comprises a multi-correlation receiver (MCR) unit which comprises a number of branches. Each branch comprises a first Delay-and-Multiply (DAM) module for subjecting a received spread spectrum code signal which includes a code of a spread spectrum code family to a delay and multiply operation to generate a new code sequence from the received code, a second DAM module for subjecting a reference code of the spread spectrum code family to the same delay and multiply operation as in the first DAM module, a combiner for combining the codes generated by said first and second DAM modules, and a correlator which receives the combined signal from the combiner for determining auto correlation function and/or a cross correlation function thereof, wherein the delay operation in each of the number of branches is different from the other branches so that a different new code sequence is generated in each branch, and wherein the receiver arrangement further comprises an adder for combining all the correlation functions from all branches.

In one embodiment, a Gold code sequence or Gold-chirp code combination of a Gold code family is used as the spread spectrum code, and first and second DAM modules are adapted to generate another Gold code of said Gold code family according to $G_{u_{12}}(k) = G(k)G(k-u_1)G(k-u_2)$, with $u_1, u_2 = 1, 2, ... , u_1, u_2 \neq N$, wherein $G_{u_{12}}(k)$ is the new Gold code obtained by multiplying the original Gold code $G(k)$ with its $u_1$- and $u_2$-chip delayed version, and $N$ is the sequence period of the code sequence. The number of branches of the MCR unit is at least $N+1$ and is such that the whole code family is generated by the entirety of the DAM modules of the different branches.

In one embodiment which has been found as a favorable compromise, especially for flexible PN-Chirp codes with very short periods, e.g. N<31, the receiver arrangement further comprises a chirp correlation unit upstream the MCR unit. Also, the receiver arrangement may additionally comprise an amplitude scaling unit downstream the DAM modul in each branch of said MCR unit.

The inventive MCR using Gold codes and based on a modified DAM block exhibits perfect correlation properties, improves signal detection and overcomes the deficiencies of SIC in terms of Near-Far effect. This approach can be used not only for ToF estimation in location systems but in any situation that requires perfect correlation properties, especially by short codes.

In another embodiment, a cubic code sequence of a cubic code family is used as the spread spectrum code, and the first and second DAM modules of the m-th branch are adapted to generate the new code sequence according to $k_m(n) = s_i(n)s_i^*(n-m)$, with $n = 0,...,p-1$, wherein $k_m(n)$ is the newly obtained sequence, $s_i(n)$ is the $i$-th sequence of the cubic code family of a size p(p-1), p is the sequence period, and * is a conjugate operation. Here, the number of branches of the MCR unit is at least p-1. The receiver arrangement for cubic codes may likewise include amplitude scaling means.

Moreover, the invention provides a method for detecting correlation of Code Division Multiple Access (CDMA) receive signals which comprise spread spectrum codes, comprising the steps of: receiving a code of a spread spectrum code family; generating a number of new code sequences from the received code by multiplying the received code with different delayed versions thereof, in parallel; combining each of the new code sequences with a respective reference code sequence that has been subjected to the same respective delay and multiply operation; determining an auto correlation function and/or cross correlation function for each of the combined signals; and combining all determined correlation functions.

**Brief Description of the Drawings**

Additional features and advantages of the present invention will be apparent from the following detailed description of specific embodiments which is given by way of example only and in which reference will be made to the accompanying drawings, wherein:

Fig. 1      shows a system architecture of an ultrasonic positioning system;

Fig. 2      illustrates a comparison of system performance for different codes;

Fig. 3      shows system performance without SIC for a sequence duration of 26.5 ms and 5 users;

Fig. 4      shows system performance without SIC for a sequence duration of 52 ms and 5 users;

Fig. 5      shows system performance without SIC for a sequence duration of 105 ms and 5 users;

Fig. 6      illustrates a known receiver implementation using SIC for ultrasonic indoor location systems;

Fig. 7      illustrates system performance under Doppler Effect;

Fig. 8      illustrates system performance under broadband interferences;

Fig. 9      shows an implementation of a DAM block according to the invention for baseband signals (rectangular pulses);

Fig. 10     shows a block diagram of a first embodiment of an MCR receiver according to the invention;

Fig. 11     illustrates a multiplication unit for branch m for complex signals;

Fig. 12     illustrates periodic correlation properties of a cubic sequence based on the novel MCR;

Fig. 13     illustrates another embodiment of the MCR of the invention for cubic sequences;

Fig. 14     illustrates flexible Gold codes with different duty cycles; (a) $\gamma = 1$ (b) $\gamma = 0.1$;

Fig. 15     shows another embodiment of the MCR according to the invention for flexible Gold codes under interference;

Fig. 16     shows yet another embodiment of the MCR according to the invention for cubic sequences under interference;

Fig. 17     illustrates chirp correlation before novel MCR for Gold-Chirp codes;

Fig. 18     shows an exemplary routine map for Gold code 7;

Fig. 19     illustrates a Gold-Chirp signal;

Fig. 20     illustrates a normalized Chirp correlator output;

Fig. 21     illustrates a normalized periodic output of the inventive MCR;

Fig. 22     shows a schematic block diagram of a complete receiver including the MCR according to the invention;

Fig. 23     illustrates two alternative implementations of correlator-amplitude scaling;

Fig. 24     shows (a) harmless overlap of two Gold codes for novel MCR, and (b) intervals in chips (x-axis indicates sampling index);

Fig. 25     illustrates the PoD under ISI interference (4 echo signals);

Fig. 26     illustrates the PoD under MAI interference (2 beacons);

Fig. 27    illustrates the PoD under MAI interference (3 beacons);

Fig. 28    illustrates the PoD under MAI interference (4 beacons);

Fig. 29    illustrates the PoD under MAI interference (5 beacons);

Fig. 30    illustrates the PoD under both MAI and ISI interference (5 beacons);

Fig. 31    shows a generalized MCR scheme for single user; and

Fig. 32    illustrates detection performance for a signal duration of 25ms.

**Detailed Description of the invention**

First, the Delay-and-Multiply (DAM) property will be explained in detail for binary sequences and for complex sequences.
In its original form the DAM property holds good for m-sequences and is used in the generation of Gold codes, see D. V. Sarwate and B. Pursley "Crosscorrelation properties of pseudorandom and related sequences", Proc. of IEEE, pp. 593-619, 1980. The DAM property for Gold codes can be stated as follows: The multiplication of a Gold code with its chip delayed version yields a different Gold code from the same code family. That is,

$$G_u(k) = G(k)G(k-u) \tag{3}$$

where $u=1,2,..., u \neq N$, $G_u(k)$ is the new Gold code obtained by multiplying the original one, $G(k)$, with its $u$-chip delayed version. Besides, the delay $u$ is not bounded by $N$-1 as the underlying Gold code in our case is periodic. That means, by choosing different $u$ in (3), different Gold codes in the family can be generated. Originally, the DAM is a specific property of an m-sequence. Multiplication of an m-sequence with its delayed version (integer chips) yields the same m-sequence with a different phase shift (or time shift). That is,

$$M(k)M(k-u) = M(k-l), \quad M(k) \in \{+1,-1\}, \quad 1 \le k \le N-1 \tag{4}$$

Due to the derivation of a Gold sequence from an m-sequence the Gold sequence has also DAM properties, as described above.
In CDMA communication systems, complex sequences have better periodic correlation properties than binary sequences. The DAM property is well known for binary sequences, e.g. m-sequence and Gold sequences.
Surprisingly, complex sequences (e.g. cubic phase sequences and Frank-Zadoff-Chu sequences) also possess this property. As an example, we simply introduce the cubic phase sequences by Lück, see H. J. Zepernick; A. Finger "Pseudo random Signal processing", Applications of pseudo random signal processing, Wiley-Verlag, 2005, pp. 225-313. Similar properties also hold for Frank-Zadoff-Chu sequences. The i-th cubic sequence $s_i(n)$ of a family of a size $p(p-1)$ is defined by

$$s_i(n) = exp(j\frac{2\pi}{p}[a_{i1}n + b_{i2}n^3]) \tag{5}$$

$$n = 0, ..., p-1, p > 3, prime; \ a_{i1}, b_{i2} \in GF(p), b_{i2} \neq 0$$

The polyphase sequence has a phase alphabet of size p.
The DAM property for cubic sequences can be stated as follows. The multiplication of a cubic sequence with its chip delayed version yields a different cubic sequence from the same code family.
That is

$$s_j(n-l) = s_i(n)s_i(n-m), \quad m \neq p \tag{6}$$

The principle of the invention shall now be explained with reference to a preferred embodiment using Gold codes to show the excellent properties in detection. It is known to generate, from a received Gold code, other Gold codes in the family, which have similar correlation properties. Furthermore, they have the same phase shift since all obtained codes are derived from the same Gold code. Intuitively, the final correlation properties will be improved by adding all the correlation functions of newly generated Gold codes together. K. Shanmugam, "Improving GPS L1 C/A code correlation properties using a novel multi-correlator differential detection technique" ION GNSS, 2006, demonstrated a conventional MCR receiver based on the primal DAM properties of GPS signals (Gold codes) to improve the indoor signal availability. However, the conventional MCR can only achieve finite AC side lobe and CC value suppression. Additionally, the valid application of the conventional MCR was under the scenario of white noise and strongly limited by increased interference power e.g. ISI and MAI, which was the case for ultrasonic indoor location systems.

The inventors have found that the Gold code family has a very interesting property, namely that combining all the periodic ACF of Gold codes from the same family with the same phase will exhibit excellent correlation properties. In order to generate all the Gold codes in the family from one received Gold code, which can guarantee the same phase combining, a new DAM block is introduced, since the conventional DAM block can generate only half of the Gold code family. The modified DAM module (for binary Gold codes in base band) can be expressed as

$$G_{u_{12}}(k) = G(k)G(k-u_1)G(k-u_2), \tag{7}$$

$$u_1, \ u_2 = 1, 2, \ldots, \ u_1, \ u_2 \neq N,$$

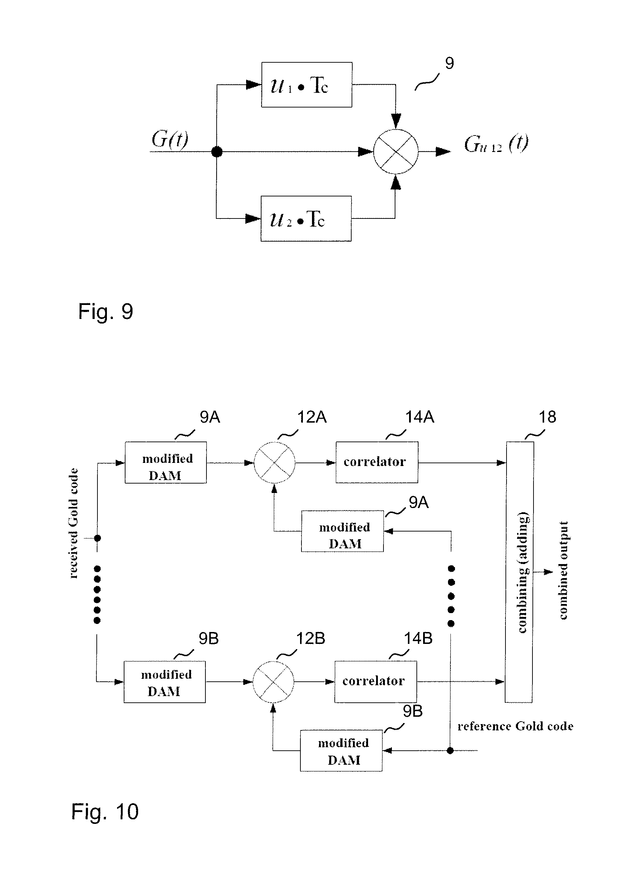

where $G_{u_{12}}(k)$ is the new Gold code obtained by multiplying the original Gold code, $G(k)$, with its $u_1$- and $u_2$-chip delayed version. By correctly choosing $u_1$ and $u_2$ all the Gold codes from the family can be generated. An exemplary embodiment of a DAM block implementation according to the invention is shown in Fig. 9.

Fig. 10 shows a block diagram of a first embodiment of a multi-correlation receiver (MCR) unit according to the invention. The MCR comprises a number of branches of which the first (9A - 14A) and the last (9B - 14B) branch are detailed. Each branch comprises a first DAM module 9 which receives a Gold code signal and subjects it to a delay and multiply operation to generate another Gold code of the Gold code family as shown in Fig. 9. Each branch further comprises a second DAM module 9 which receives a reference code of the same Gold code family and subjects it to the same delay and multiply operation as the first DAM module. The codes generated by said first and second DAM modules 9 are combined in a combiner 12, and the combined signal is fed to a correlator 14 which determines ACF and/or CCF. Each branch applies different $u_1$ and $u_2$ for the delay operation so that the DAM modules of each branch generate a different Gold code of the same Gold code family, and the number of branches is selected such that the whole code family is generated by the entirety of the DAM modules of the different branches. The MCR further comprises an adder 18 for combining all the correlation functions from all braches.

To determine the correlation suppression of the novel MCR method, the following performance was used,

$$\rho_{AC} = 20 log_{10}\left[\frac{R_{AC}(i=0)}{max|R_{AC}(i\neq 0)|}\right],$$

$$\rho_{CC} = 20 log_{10}\left[\frac{R_{AC}(i=0)}{max|R_{CC}(i)|}\right], \tag{8}$$

where $\rho_{AC}$ and $\rho_{CC}$ are autocorrelation and cross-correlation suppression ratios, respectively.

The following table compares ACF and CCF suppression in dB of the multi-correlation differential detection according to the invention and the traditional matched filter approach. From the table it can be seen that ACF based on the inventive Multi-Correlation Differential Detection (MCDD, or MCR) can reach an infinite side-peak suppression for all Gold codes, and CCF also obtains a great enhancement over that based on matched filter.

| | MCDD | MCDD | Matched tilter |
|---|---|---|---|
| Codes | $\rho_{AC}$ | $\rho_{CC}$ | $\rho_{AC}=\rho_{CC}$ |
| Gold 31 | $\infty$ | 29.8 | 10.75 |
| Gold 63 | $\infty$ | 35.98 | 11.37 |
| Gold 127 | $\infty$ | 42 | 17.7 |
| Gold 511 | $\infty$ | 54 | 24.4 |

Another embodiment of the MCR of the invention, for receiving complex code sequences, is similar to the MCR shown in Fig. 10. However, for complex sequences, the implementation of the DAM module for the m-th branch must be modified. The relationship for cubic sequences can be concluded by

$$k_m(n) = s_i(n)s_i^*(n-m) \, . \tag{9}$$

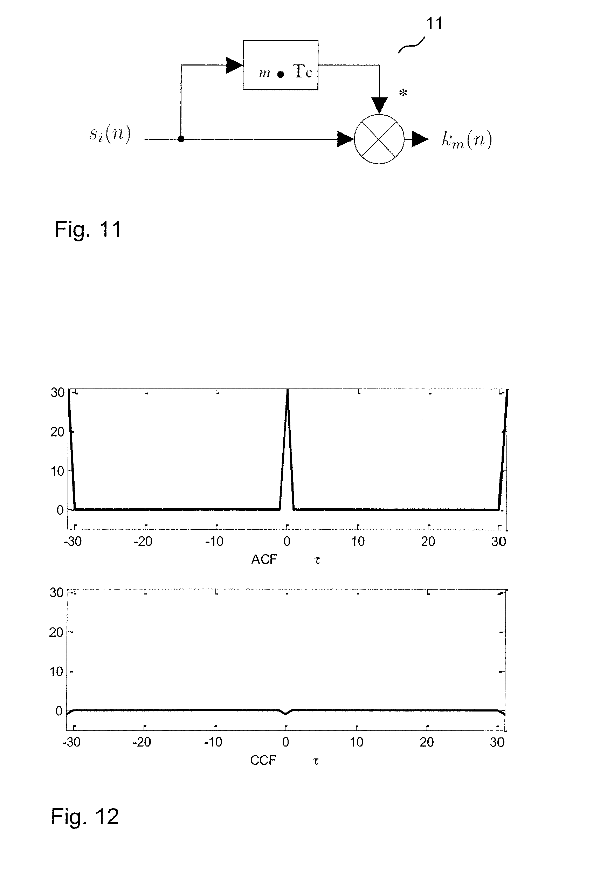

where $k_m(n)$ is the newly obtained sequence. However, it does not belong to the cubic sequence family. Therefore, by implementing a complex MCR for cubic sequences some modifications must be carried out. The corresponding multiplication unit is illustrated in Fig. 11.

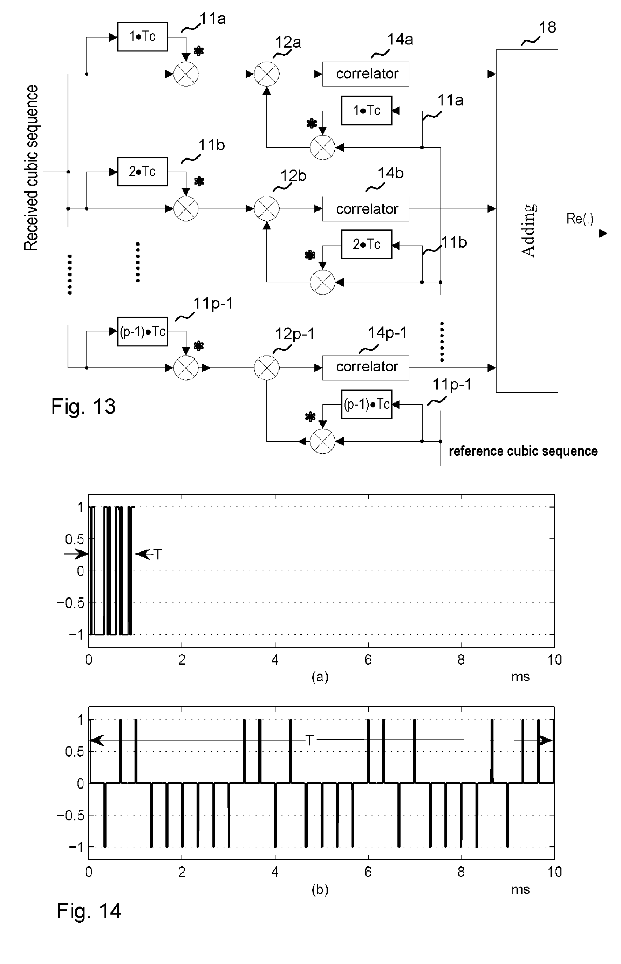

Fig. 13 illustrates a block diagram of a complex MCR of the invention for cubic sequences which uses the multiplication unit of Fig. 11. The number of branches in the complex MCR receiver is p-1, where p is the sequence period. Otherwise, the complex MCR is similar to the MCR for Gold codes as shown in Fig. 10, and corresponding elements are designated with the same or similar corresponding reference numerals.

Fig. 12 illustrates the excellent periodic correlation properties of cubic sequences based on the novel Multi-Correlation Differential Detection of the invention.

In real scenarios where there is much interference, e.g. ISI and MAI interference, due to signal reflection and multiple access conditions, and white noise, the novel MCR based on the inventive DAM modules as shown in Fig. 9 and Fig. 11 alone might not be sufficient for achieving optimal correlation properties. This interference will unfortunately result in radical signal distortions due to the multiplication unit, especially for short Gold codes. A simple and effective approach to deal with this is the utilization of flexible PN codes. Fig. 14 shows flexible Gold codes with different duty cycles; (a) a duty cycle of $\gamma = 1$, and (b) $\gamma = 0.1$.

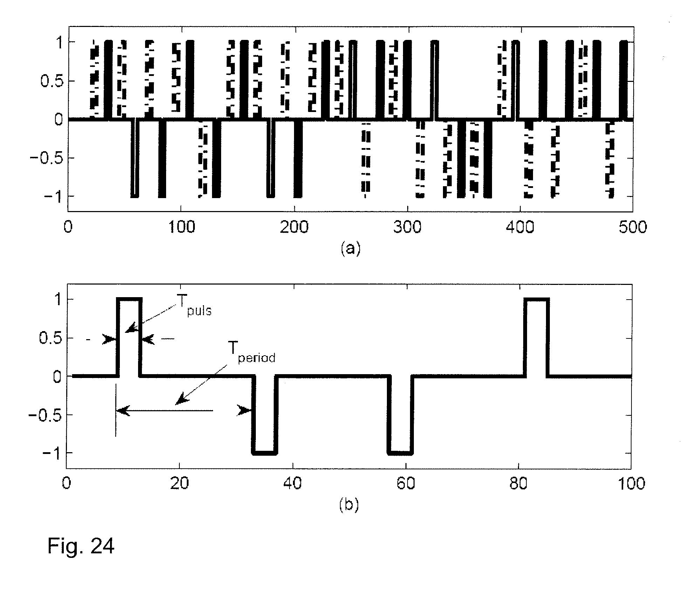

It is suggested to introduce intervals between chips in Gold codes, as will be explained in detail below with reference to Fig. 24, to reduce the probability of chip-wise overlap of two Gold codes. By introducing intervals in the Gold code sequences it is possible that there will be a harmless overlap of the desired signal and interference and the total system behavior is just as there were no other ISI- and MAI-interference except white noise influence. Following the correlator, amplitude scaling is needed in each branch to compensate for the residual elimination error derived from the modified DAM block.

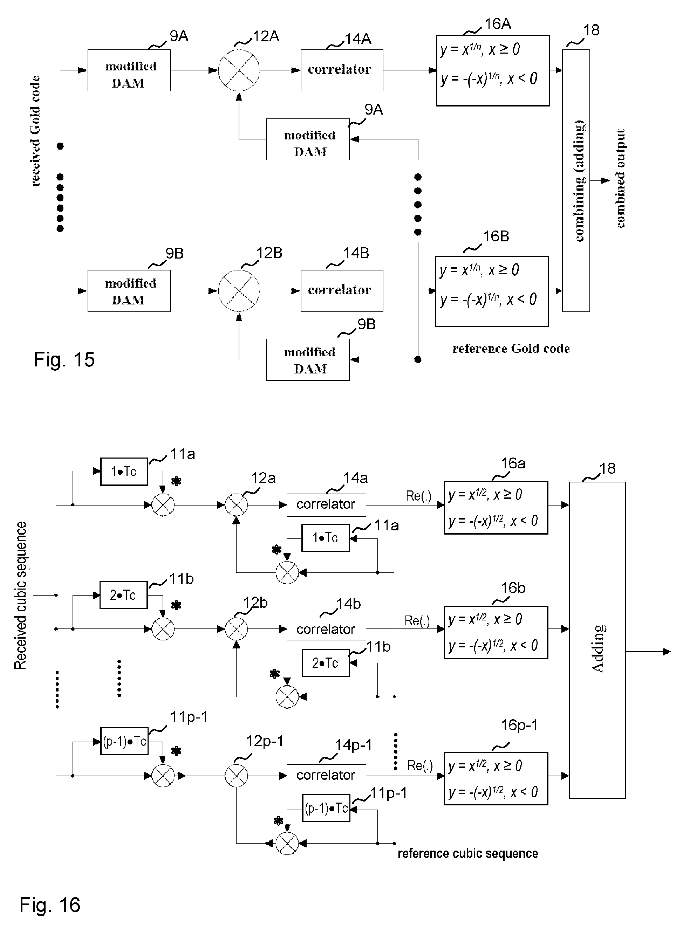

Fig. 15 shows a block diagram of an embodiment of the MCR according to the invention for flexible Gold codes including amplitude scaling in each branch, at 16A and 16B, respectively. Amplitude scaling can be performed according to $y = x^{1/n}$, $x \geq 0$ and $y = -(-x)^{1/n}$, $x < 0$. Otherwise, the MCR of Fig. 15 is similar to that of Fig. 10, and corresponding elements are designated with the same or similar corresponding reference numerals.

Fig. 16 shows a block diagram of an embodiment of the MCR according to the invention for cubic sequences including amplitude scaling in each branch, at 16a, 16b, and 16p-1, respectively. Amplitude scaling can be performed according to $y=x^{1/2}$, $x \geq 0$ and $y = -(-x)^{1/2}$, $x < 0$. Otherwise, the MCR of Fig. 16 is similar to that of Fig. 13, and corresponding elements are designated with the same or similar corresponding reference numerals.

Regarding the feasible implementation of novel MCR, a sufficient SINR gain for single pulses in sequences must be guaranteed to compensate for the SINR loss in the DAM module. Chirp pulses are suggested to achieve a SINR gain for single pulses. Therefore, an additional chirp correlation must be carried out upstream the novel MCR unit.

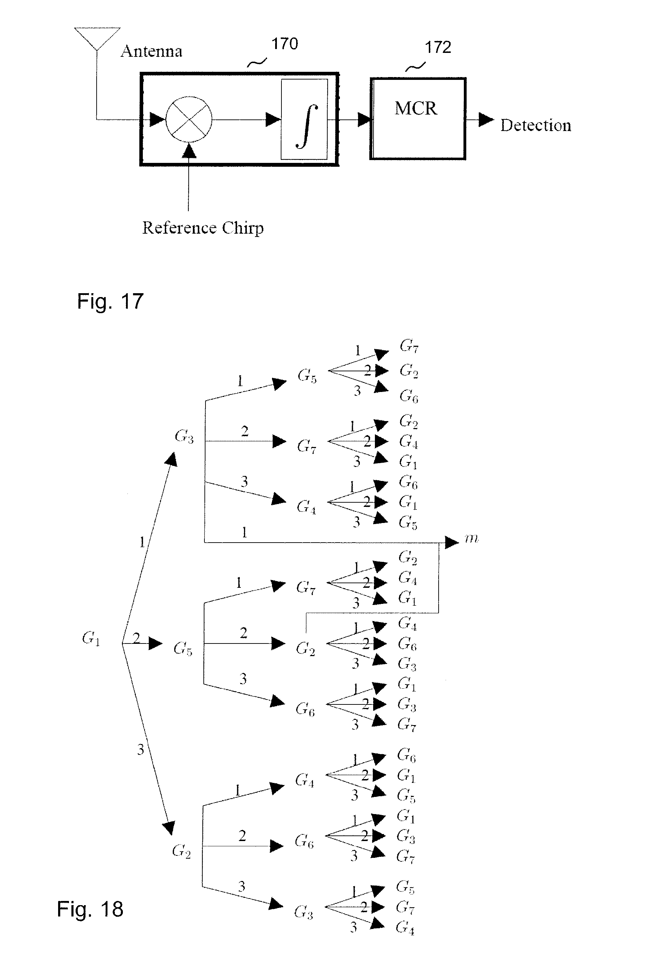

Fig. 17 illustrates a simplified principle scheme of a receiver arrangement showing a chirp correlation block 170 connected between the antenna and a MCR unit 172 for Gold-chirp code combinations. Here, the MCR unit 172 can be designed like any of the MCR units for Gold codes as shown in Fig. 10 or Fig. 15. Chirp correlation block 170 combines the received Gold-chirp code with a reference chirp and subjects the combined signal to an integration operation, so block 170 is similar to a matched filter operation.

When introducing chirp pulses there are two important points for the improvement of the novel MCR: (a) improving the code energy efficiency; and (b) achieving additional pulses gain to compensate for the SINR loss in the DAM module.

As a comprehensive example we present the Gold codes family with N=7, of course the principle holds for all Gold code families. A code routing map for the DAM module with the assumption that a received flexible Gold code is Gold 1, is given in Fig. 18.

The function $G_i \xrightarrow{m} G_j$ stands for the DAM operation: $G_j(n\text{-}l)=G_i(n)G_i(n\text{-}m)$.

$$
\begin{array}{llllllll}
G_1: & \{1 & -1 & -1 & -1 & -1 & -1 & -1\} \\
G_2: & \{1 & -1 & 1 & 1 & 1 & -1 & 1\} \\
G_3: & \{1 & 1 & -1 & -1 & 1 & 1 & 1\} \\
G_4: & \{-1 & -1 & 1 & -1 & -1 & 1 & 1\} \\
G_5: & \{1 & 1 & 1 & 1 & -1 & 1 & -1\} \\
G_6: & \{-1 & 1 & -1 & 1 & -1 & -1 & 1\} \\
G_7: & \{-1 & -1 & -1 & 1 & 1 & 1 & -1\} \\
m: & \{1 & -1 & -1 & 1 & -1 & 1 & 1\}
\end{array}
$$

To achieve optimal correlation properties for the combination of all branches, all Gold codes of the family are required at least one time, and one m-sequence, from which the Gold codes are derived.

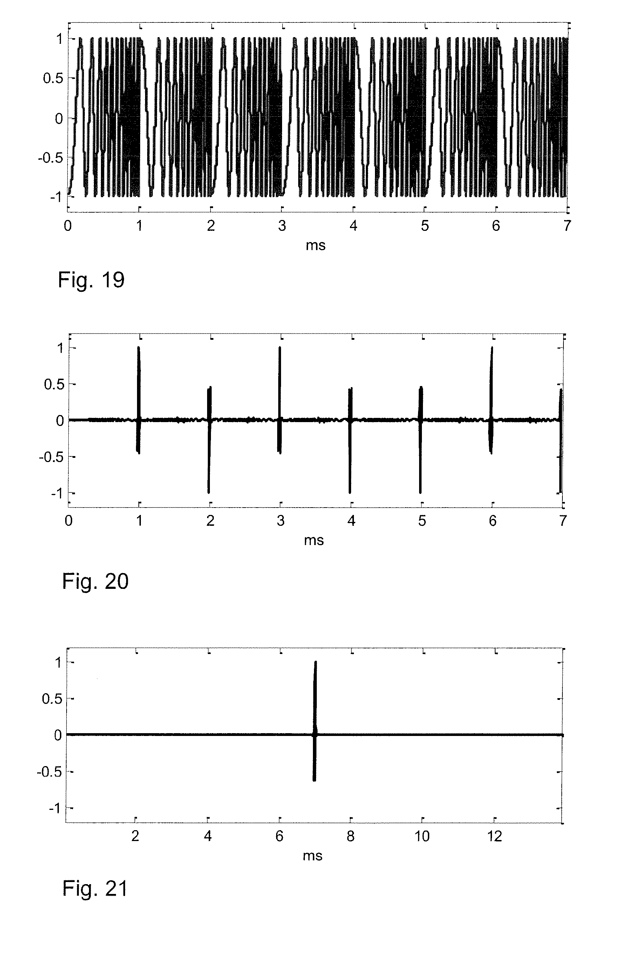

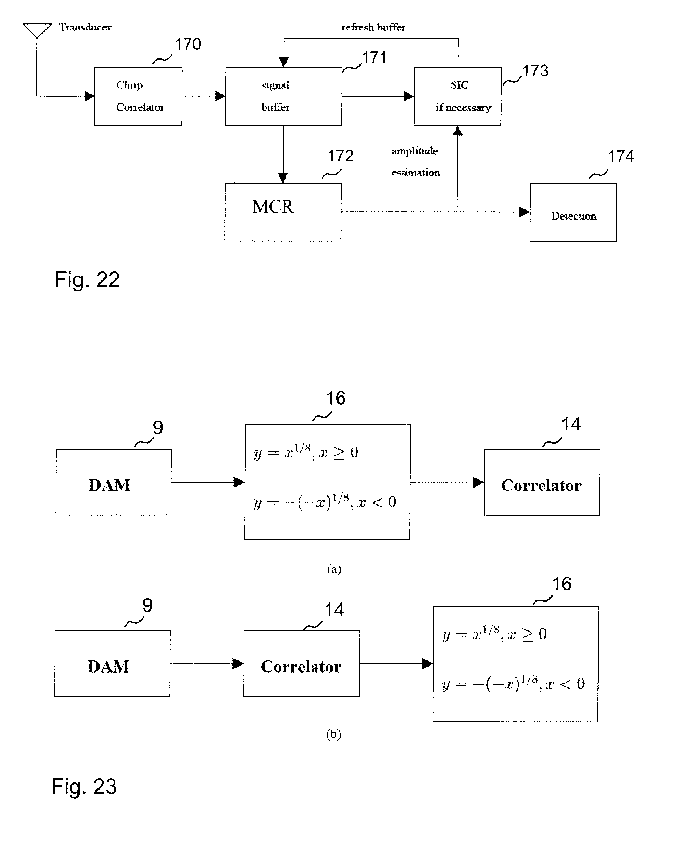

A Gold-chirp signal is plotted in Fig. 19. Following the chirp correlator 170 illustrated in Fig. 17, the waveform is as illustrated in Fig. 20. If amplitude scaling in each branch is performed before the correlator, as depicted in Fig. 23 (a), then the final periodic output of the novel MCR is as shown in Fig. 21

One example of a complete scheme of a receiver arrangement which includes the MCR unit 172 of the invention is shown in Fig. 22. There are some similarities with the traditional Multi-User Detection (MUD) based on simple matched filter as shown in Fig. 6.

As illustrated in Fig. 22, SIC, at 173, could optionally be used against MAI, if necessary. However, the novel MCR alone has a relative great immunity to compensate for MAI interference. Furthermore, the application of SIC may increase the detection probability again.

As mentioned before, we need all Gold codes and additionally one m-sequence. From the Gold routine map we can get the logical routine plan for the MCR as follows:

$$G_1 \xrightarrow{1} G_3 \xrightarrow{2} G_7 \xrightarrow{3} G_1$$

$$G_1 \xrightarrow{1} G_3 \xrightarrow{2} G_7 \xrightarrow{1} G_2$$

$$G_1 \xrightarrow{2} G_5 \xrightarrow{2} G_2 \xrightarrow{3} G_3$$

$$G_1 \xrightarrow{2} G_5 \xrightarrow{2} G_2 \xrightarrow{1} G_4$$

$$G_1 \xrightarrow{1} G_3 \xrightarrow{3} G_4 \xrightarrow{3} G_5$$

$$G_1 \xrightarrow{1} G_3 \xrightarrow{3} G_4 \xrightarrow{1} G_6$$

$$G_1 \xrightarrow{3} G_2 \xrightarrow{3} G_3 \xrightarrow{2} G_7$$

$$
\begin{array}{c}
G_1 \xrightarrow{1} G_3 \xrightarrow{1} \quad m \\
\uparrow \\
G_1 \xrightarrow{2} G_5 \xrightarrow{2} G_2
\end{array}
$$

Obviously, there are many alternative methods to get the desired transformed sequences. Due to the many multiplications which will result in SNR loss the former pulses gain from chirp correlation is very important. Additionally, an appropriate window function could also be utilized to suppress the side lobe of the chirp ACF function. Thus, a tradeoff must be made between pulses gain and side lobe suppressing. On the other hand, one can take the advantage of the DAM block combining with the amplitude scaling unit for later achieving additional SNR gain with respect to white noise.

As illustrated in Fig. 23(b), the received Gold codes after passing through DAM unit 9 are supplied to correlation unit 14 and then to amplitude scaling unit 12, for reducing the residual elimination error. Or, as illustrated in Fig. 23(a), the received Gold codes after having passed DAM unit 9 may first be supplied to amplitude scaling unit 12 and then to a correlation unit 14. In the example of Fig. 23, the order of amplitude back scaling is 8.

The application of the inventive MCR based on the novel DAM module 9 of Fig. 9 provides a new method to obtain perfect correlation properties with short Gold codes. However, these perfect correlation properties can be reached only under the condition, that every new generated Gold code in each branch is not distorted by other Gold codes (from multipath or MAI). Otherwise, the AC side lobes and CC values of correlation functions from every branch cannot be mutually eliminated perfectly. This requirement is difficult to meet by using conventional Gold codes in case of multipath and multiple access conditions.

As stated above, we suggest to introduce intervals between chips in Gold codes (see Fig. 24) to reduce the probability of chip-wise overlap of two Gold codes. To analyze the interference between ranging codes we assumed that there are $K$ beacons active simultaneously. The $k$-th beacon is assigned a Gold code waveform $a(t)$ which consists of a periodic sequence of unit amplitude, positive and negative chips $a_j^k$, rectangular pulses of a duration $Tc=Tpuls.$ We can write $a_k(t)$ as

$$a_k(t) = \sum_{j=-\infty}^{\infty} a_j^k \; P_{T_c}(t - jT_c) \; P_{T_c/\gamma}(t - jT_c/\gamma) \tag{10}$$

where $P_\tau(t) = 1$, for $0 \leq t \leq \tau$, and *otherwise* $P_\tau(t) = 0$, $\gamma = T_{pulse} / T_{period}$ is the transmit duty cycle of chips of Gold codes. We analyze the signals in base band. Thus, the transmitted signal for the k-th user is

$$s_k(t) = \sqrt{p} \cdot a_k(t) \tag{11}$$

where p represents the common signal power. The received signal by taking MAI, ISI and white noise into account can be given by

$$r(t) = \sum_{k=1}^{K} \sum_{j=0}^{l} h_{kj} \; s_k(t - \tau_{kj}) + n(t) \tag{12}$$

where, $l$ and $h_{kj}$ are the number of resolvable echos and the channel impulse response, respectively. The received signal $r(t)$ is then fed through the modified DAM block. The output of an DAM block of the m-th branch can be expressed as

$$\begin{aligned} r_m(t) &= r(t) \cdot r(t - u_1 \cdot T_c/\gamma) \cdot r(t - u_2 \cdot T_c/\gamma) \\ &\quad + n_m(t), \end{aligned} \tag{13}$$

where $u_1, u_2$ are integer delays. The newly generated codes, $r_m(t)$, in case of harmless overlap (Fig. 24a) are also Gold codes without distortion. If the original reference Gold code is assumed as $s_i(t)$, the new reference Gold code for the m-th branch after the DAM module can be expressed as

$$y_m(t) = s_i(t) \cdot s_i(t - u_1 \cdot T_c/\gamma) \cdot s_i(t - u_2 \cdot T_c/\gamma)$$

$$(14)$$

The correlator output for the m-th branch can then be given by

$$
\begin{aligned}
z_m(i) &= \frac{1}{N} \sum_{k=0}^{N} y_m(k) \cdot r_m(k - i) \\
&= \frac{1}{N} \sum_{k=0}^{K-1} \left( \sum_{j=0}^{l_1} R_{AC}(i) + \sum_{q=0}^{l_2} R_{CC}(i) \right) \\
&\quad + n'_m(i).
\end{aligned}
$$

$$(15)$$

Finally, the combined detection output from all the branches is given by

$$
\begin{aligned}
z_{MCDD}(i) &= \sum_{k=0}^{K-1} \frac{1}{MN} \underbrace{\left( \sum_{j=0}^{l_1} \sum_{m=0}^{M-1} R_{AC,k,m,j}(i) \right)}_{\text{combined ACF}} \\
&\quad + \underbrace{\sum_{q=0}^{l_2} \sum_{m=0}^{M-1} R_{CC,k,m,l}(i))}_{\text{combined CCF}} \\
&\quad + \frac{1}{M} \sum_{m=0}^{M-1} n'_m(i),
\end{aligned}
$$

$$(16)$$

wherein $R_{AC},k,m,j$ and $R_{CC},k,m,l$ are autocorrelation and cross-correlation of the m-th branch, and j-th and l-th component, respectively, M=o·(N +1) with (o∈Z+) the total number of branches, and $l_1$ and $l_2$ the number of resolvable echo signals, respectively. A detailed analysis about the intervals in Gold codes can be found in Y. Lu; A. Finger "Ultrasonic Beacon-Based Local Position System Using Broadband PN (Pseudo Noise)-Chirp Codes", The 9th IASTED International Conference on Wireless and Optical Communications, Canada, 2009. As stated before, if two Gold codes or with their echo signals overlap each other like in the case of Fig. 24a, the output of the novel MCR (combined ACF and CCF) exhibits perfect correlation properties both for auto- and cross-correlation, just as there were no MAI and ISI interference and will not result in Near-Far problem.

In order to show the advantages of the proposed novel MCR combining with flexible Gold codes as ranging signals, some simulations base on MATLAB were carried out. The feasibility of the novel MCR is always combined with intervals between chips in Gold codes. There were maximal 5 beacons active simultaneously. The frequency of the signals ranged from 20-70kHz, and the sample frequency was 200 kHz. Gold code 31 with a transmit duty cycle of γ =0.0625, and Gold code 511 with a transmit duty cycle of γ = 1 were used for the simulations, so both have an equivalent signal duration of 10ms, for a fair performance comparison. BPSK modulation was used with a center frequency of 45 kHz. In practice, amplitude scaling was introduced for each branch to compensate for the residual elimination error. Furthermore, the system used the Image Method to simulate the impulse responses of the room. The room was 5x4x3 meters with walls, ceiling and floor having a typical reflection coefficient of 0.35. The beacons were placed under the ceiling with the beam towards the floor. H. Mike; W. Andy "A novel broadband ultrasonic location system". Proceedings of UbiComp 2002: 4th International Conference on Ubiquitous Computing. Goteborg, Sweden Sept. 2002. pp. 264-280 describes the construction of ultrasonic transducers and their beams. In this simulation the system performance probability-of-detection (PoD) which is based on simple peak detection algorithms, was assessed mainly under ISI and MAI interference; they are usually much stronger than white noise in DS-CDMA systems.

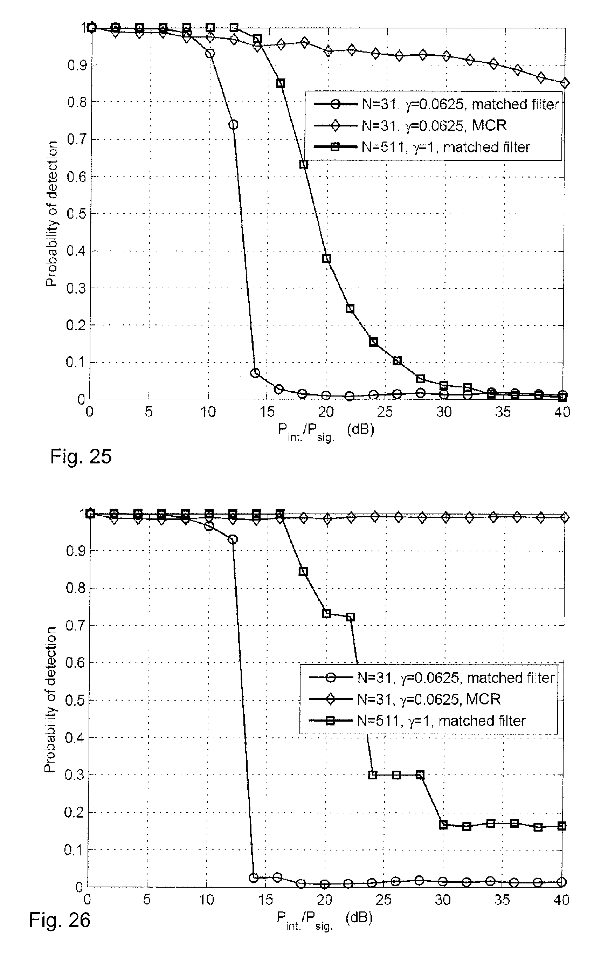

Fig. 25 represents PoD under ISI-interference, with 4 echo signals. The amplitude ratio between every echo signals was constant (1:0.5:0.25:0.125). The echo signals were assumed to be uniformly distributed over the sequence duration. The x-axis describes the power ratio of a first echo signal to direct signal component $P_{int}/P_{sig}$. Fig. 25 shows that the PoD of the inventive MCR receiver has excellent immunity against Near-Far effect, even with a power ratio $P_{int.}/P_{sig.} > 30$dB. In contrary to a severe Near-Far effect and great performance deterioration when using the matched filter approach, there is still a 85% response from the MCR of the invention.

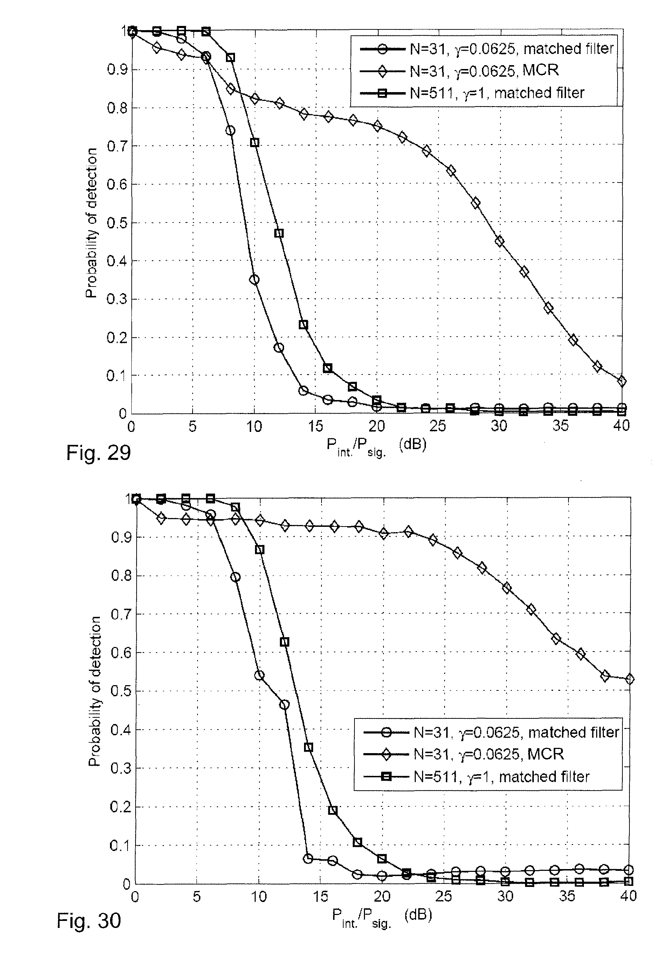

Figs. 26 - 29 show system performances both for matched filter and the inventive MCR under MAI-interference for a system architecture using 2 to 5 beacons, respectively. Fig. 26 indicates that there is almost no MAI influence on the MCR due to the fact that there are only two beacons active which means a very low probability of the worst case chip overlap. By increasing the number of active beacons, namely from 2 to 5, the response from both matched filter and MCR experience performance deterioration. However, the MCR of the invention outperforms matched filter clearly, especially under severe Near-Far effect. Fig. 30 shows system performances under both ISI and MAI-interference. 5 beacons were active simultaneously; one echo signal for every ranging signal was added. Additional performance deterioration can be recognized due to an increase of interference. Nevertheless, a dominant outperform of the MCR of the invention under severe Near-Far effect is evident. Our assessments here are just for the theoretic analysis. The interference power to signal power ratio range to great value ($P_{int.}/P_{sig.}$= 0~40dB for several beacons simultaneously). In practice, the channel is more moderate than our assumption in the simulations. Therefore, a simple peak detection algorithm will be sufficient for the MCR receiver which overcomes the difficulty of the SIC method to combat Near-Far effect.

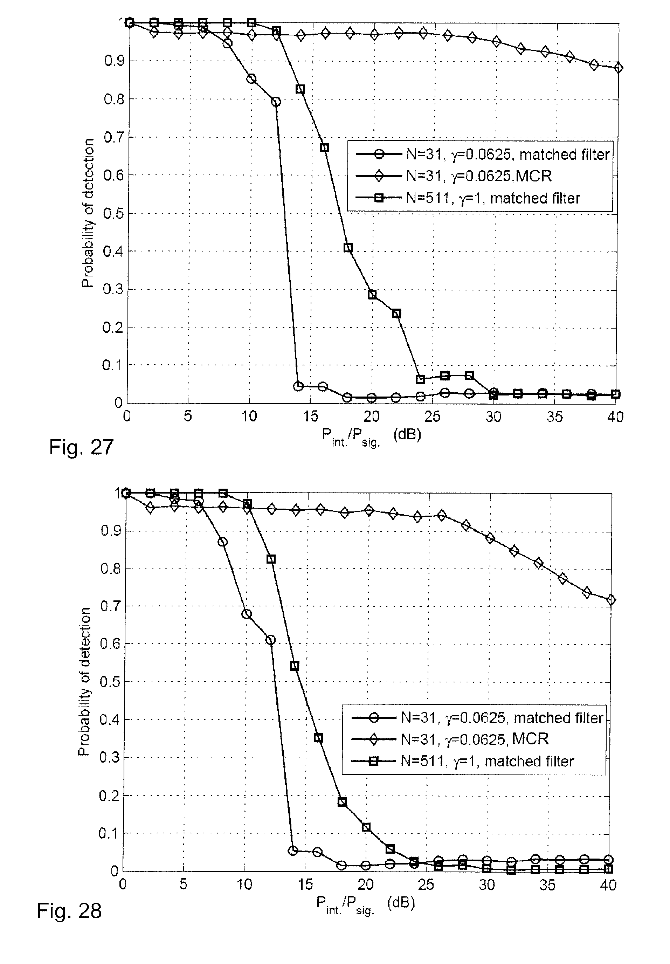

From Figs. 27 - 30 it can be recognized that in case of no severe Near-Far effect ($P_{int.}/P_{sig.}$=0~10dB) the performance of the traditional matched filter is a little better than that with MCR. This phenomenon explicitly indicates that the performance of MCR is not dominated by signal power difference but rather by the probability of a worst case chip overlap.

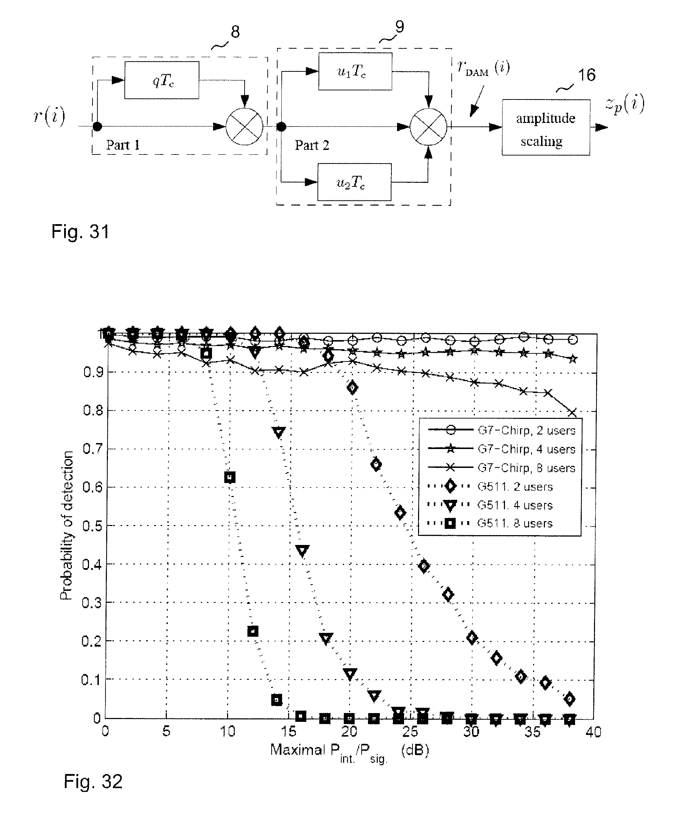

A generalized DAM module and the corresponding amplitude scaling function will now be described with reference to Fig. 31

The DAM property is well known for binary sequences, e.g. m-sequence and Gold sequence. Above, we have modified the conventional DAM property to generate the whole set of Gold codes and achieved the optimal correlation properties by using MCR. Actually, MCR holds well for unipolar pulses sequences, i.e. pulses with an all positive or all negative amplitude within the pulse period. The generalized (modified) DAM operation, which holds also for non-unipolar pulses sequences, can be expressed as

$$G'(k) = G(k)G(k - q), \ q = 1, 2, \ldots, q \neq N,$$
$$G_{u_n}(k) = G'(k) \prod_{j=1}^{n-1} G'(k - u_j), \tag{17}$$

where $G_{u_k}(k)$ is the new Gold code obtained by the modified DAM, and $G(k)$ is the original Gold code. By correctly choosing q, $u_j$, all the Gold codes from the same family can be generated.

Considering the correlation properties, both (real) binary sequences and (complex) sequences have the same AC side lobe suppression ratio and same CC value suppression ratio, which can be formulated as

$$\rho_{AC_{real,complex}} = 20log_{10}\left[\frac{R_{AC}(i = 0)}{max|R_{AC}(i \neq 0)|}\right] = \infty,$$
$$\rho_{CC_{real,complex}} = 20log_{10}\left[\frac{R_{AC}(i = 0)}{max|R_{CC}(i)|}\right] = 20log_{10}N, \tag{18}$$

where N is the sequence period, $\rho_{AC}$ and $\rho_{CC}$ are the AC and CC suppression ratio, respectively. The inventors have shown that with the inventive MCR it is possible to achieve excellent correlation properties with small period sequences.

The MCR described so far performs well in the noiseless case. In ultrasonic indoor location systems under multiple access conditions, besides the desired ranging signals there is also MAI, ISI and additive white noise. The MCR receiver is based on the non-linear DAM module, which will result in significant signal amplitude variation and code distortion under MAI. Therefore, an equivalent single user system is needed by applying large intervals, which is also required for pulse design. Furthermore, amplitude variation must also be decreased to reduce the great residual elimination error.

To deal with this problem, a presently preferred embodiment of the MCR includes amplitude scaling, as exemplified in Figs. 15 and 16. We first consider rectangular pulses sequences under MAI. Recall that the general modified DAM block for Gold codes can be expressed by (17). For Gold codes with e.g. N=7 which have very bad correlation properties based on matched filter, we propose the generalized DAM unit as shown in Fig. 31. It consists of two parts: The first part 8 is a conventional DAM block which tries to guarantee unipolar pulses; the second part 9 is the modified DAM module of the invention as introduced in Fig. 9 which can generate all codes from the family. If the input signal after D/A converter to DAM block is assumed as:

$$r(i) = \sum_{k=1}^{K} h_k s_k(i) + n(i) \qquad (19)$$

where K is the number of active users, $h_k$ is the channel coefficient, $s_k(i)$ is the signal from the k-th beacon and n(i) is white noise $N(0,\sigma^2)$ . Here, we only consider the case of harmless overlap between different Gold codes (see Fig. 24a). Considering that the MCR behavior (intervals larger than channel delay spread) is approximately like single user performance (no MAI and ISI) under harmless overlap conditions. Then the expression after part 1 of the DAM module of Fig. 31 can be given by

$$\begin{aligned} r_q(i) = & r(i)r(i - qT_c) \\ = & \sum_{k=1}^{K} [h_k s_k(i) + n(i)][h_k s_k(i - qT_c) + n(i - qT_c)] \\ = & \sum_{k=1}^{K} \underbrace{h_k^2 s_k(i) s_k(i - qT_c)}_{\text{signal}} + \underbrace{h_k s_k(i) n(i - qT_c)}_{\text{crossterm 1}} \\ & + \underbrace{h_k s_k(i - qT_c) n(i)}_{\text{crossterm 2}} + \underbrace{n(i) n(i - qT_c)}_{\text{noise product}} \end{aligned} \qquad (20)$$

In case of harmless overlap both crossterms 1 and 2 are a gaussian process while the distribution of the noise product term can be given by

$$P(x) = \frac{K_0\left(\frac{|x|}{\sigma^2}\right)}{\pi \sigma^2} \qquad (21)$$

where $K_n(x)$ is a modified Bessel function of the second kind. The distribution of equation (23) is complex for analysis, especially after part 2 in the DAM. Therefore, it is reasonable to use an approximation in practice. From (23) it can be seen that if the input SNR is relative large, then the last term, namely the noise product, can be ignored. The rest of it is a gaussian process, approximately $N(A^2, 2(A\sigma)^2)$, where A is the signal amplitude at the input. Therefore, the expression after part 2 of the DAM module of Fig. 31 can be given by

$$r_{\text{DAM}}(i) = \sum_{k=1}^{K} r_q(i) r_q(i - u_1 T_c) r_q(i - u_2 T_c) \qquad (22).$$

In case of a large input SNR, rDAM(i) can be approximately considered as a gaussian process $N(\mu_{DAM}, \sigma^2_{DAM})$ ~ $N(A^6, 6A^{10}\sigma^2)$. It is therefore impossible to eliminate the values between branches in the MCR under this variance. However, we can scale the magnitude of $r_{DAM}(i)$ with an AS operation:

$$z_p(i) = \begin{cases} \sqrt[n]{r_{\text{DAM}}(i)} & \text{if } r_{\text{DAM}}(i) \geq 0 \\ -\sqrt[n]{-r_{\text{DAM}}(i)} & \text{if } r_{\text{DAM}}(i) < 0, \end{cases} \qquad (23)$$

where n is the scaling factor (SF). After the AS operation, the distribution (for large input SNR) can be approximately given by

$$P(z) = \frac{nz^{n-1}}{\sigma_{\mathrm{DAM}}\sqrt{2\pi}} e^{-[\frac{(z^n - \mu_{\mathrm{DAM}})^2}{2\sigma_{\mathrm{DAM}}^2}]} \tag{24}$$

The corresponding mean value and variance are approximately (A, $\dfrac{\sigma^2}{6}$) in case of n=6. It has been 6 shown above, that the correlator output of the m-th branch for K users can be expressed by (15).

Finally, the combined detection output from all the branches is given by

$$z_{\mathrm{MCR}}(i) = \sum_{k=1}^{K} \frac{1}{MN} \Big\{ \underbrace{\sum_{m=1}^{M} R_{\mathrm{AC},k,m}(i)}_{\text{combined ACF}} \tag{25}$$
$$+ \underbrace{\sum_{m=1}^{M} R_{\mathrm{CC},k,m}(i)}_{\text{combined CCF}} \Big\} + \underbrace{\frac{1}{M} \sum_{m=1}^{M} n'_m(i)}_{\text{noise sum}},$$

where M is the number of branches in the MCR. If there was no amplitude scaling under strong MAI and a white noise scenario, the value of the noise sum in (25) could easily exceed the value of combined ACF, i.e. detection failure. It has been demonstrated that without AS the residual elimination error can be so large that the desired signal is not detectable any more. With the combination of MCR and AS, the residual elimination error can be reduced significantly, even under large power difference conditions. However, all the assumptions above are under the condition of a large input SNR. In case of a low input SNR, the distribution is very complex. Certainly, the input SNR does have influence on detection performance. However, this problem can be facilitated by chirp compression, recalling that the large intervals in sequences will be filled by chirp pulses (PN-Chirp).

In order to show the feasibility and the advantages of MCR combining with PN-Chirp codes, MATLAB simulations were carried out. The attenuation of physical channel and the frequency bandpass of transducer were simulated by butterworth bandpass filter (40-60kHz) of I-th order. The system used the image method to simulate the impulse response of an empty room (4x4x3 meters). The work policy was polled-centralized mode, for details see H. Mike; W. Andy "A novel broadband ultrasonic location system", Proceedings of UbiComp 2002: 4th International Conference on Ubiquitous Computing. Goteborg, Sweden Sept. 2002. pp. 264-280. Mobile units as transmitters and reference beacons as receivers under the ceiling were used, see Fig. 1. The signal after receiving was first chirp-wise compressed to achieve an SNR gain for effective realization of MCR, and was then fed through the modified DAM module, after that amplitude scaling was carried out (the scaling factor (SF) was chosen n=6) to reduce amplitude variation. The last step was correlation in every branch and then the branches were added together. All demonstrations were carried out without successive interference cancellation (SIC), and a simple peak detection algorithm was used.

One of the important advantages of time-frequency extending of chirp pulses is the improvement of distance error variance. Considering the low bound of error variance, single user performance only under white noise was tested. Two candidate pulses (chirp 1 and chirp 2) were tested. They had the same signal energy after receiving, but different effective bandwidths. The result was, that the ranging signal with time-frequency extended pulses, namely chirp 2, reached better accuracy than that without time-frequency extending (chirp 1). A better accuracy can be achieved by further time-frequency extension, especially under multiple access conditions. This will result in not only an increase of signal bandwidth but also a significant improvement of the average output SNR, i.e. a very effective reduction of ToF variance.

As stated above, the detection performance is dependent on the codes overlap conditions (channel and intervals) and the input white noise. Due to the non-linear properties of DAM, the input white noise has relatively great influence on MCR. We first considered the case with only one user but with varying input SNR. The signals were Gold codes N=7 combined with chirp (frequency 20-100 kHz, chirp duration 3.5ms), and the sampling frequency was 208 kHz. Before MCR, chirp compression was carried out (see Fig. 17). The detection performance decreased rapidly for an input SNR< -15 dB. A better performance can be achieved by increasing sampling frequency or time-frequency extending. However, for most indoor ultrasonic location system scenarios, the significant interference is MAI and ISI, and the average input SNR can be assumed to be 0 dB.

Fig. 32 illustrates MCR performance under different MAI and ISI. For a first comparison two different ranging codes were used: Gold codes N=7 combined with time-frequency extended chirp (frequency 20-100 kHz, duration 3.5ms) (G7-Chirp) and Gold codes N=511 (G511) combined with rectangular pulses of bandwidth B=20 kHz, which were modulated by BPSK on a central frequency of 50 kHz. Thus the codes have almost the same signal duration about 25ms. Receiving of G7-Chirp was based on MCR, while that of G511 was based on matched filter. The x- and y-axis in Fig. 32 stand for the maximal interference power (MAI and ISI) to signal power ratio and the detection probability, respectively. It is readily noticed that the MCR based receiver, in spite of the short sequence period N=7 yields a very high detection probability. The advantage can be seen particularly for large signal power difference conditions. However, the performance of MCR is dependent on the probability of adverse overlap between codes while the performance of matched filter is more on code gain. Therefore, one can notice that the detection probability of MCR in Fig. 32 for small value of $P_{int.}/P_{sig.}$ is slightly worse than, but still more than 90% of that of matched filter. The advantages of G7-Chirp based on MCR are that first they have more time margin for the time-frequency extending of chirp pulses to get more effective bandwidth; second there is always the probability of getting optimal correlation properties. It has been demonstrated that when continuing to extend the chirp duration, e.g. chirp duration is 5ms, such that the total sequence duration is 35ms, further improvement of detection performance can be achieved in the same channel. In order to get a fair comparison, G511 was also extended to 35ms by introducing the intervals, which will result in both SNR and detection gain. MCR still outperformed the matched filter significantly.

Another possible way to improve the detection performance is the scaling factor, which determines the amplitude variation after correlation in each branch. Recall that all the above simulations were based on a scaling factor (SF) of n=6, theoretically, it could be any value. It is indicated that, in case an emitted signal is present in the received signal mixture, choosing relatively large values of SF yields a higher variance ratio $\sigma_{r(i)}^{2} / \sigma_{z_{p}(i)}^{2}$, so that a higher detection probability can be achieved. However, a reasonable threshold must be defined for a different SF.

It has thus been shown that the novel MCR, using Gold codes, based on a modified DAM block exhibits perfect correlation properties, improves the signal detection and overcomes the deficiencies of SIC in terms of Near-Far effect. It has been shown by simulation that MCR significantly outperforms the traditional matched filter approach, even based on long Gold codes with the same signal duration. As the effectiveness of MCR is strongly dependent on intervals between chips, an effective way to improve the system performance under severe interference is by adjusting the transmit duty cycle, so that the system can still achieve a good performance under severe Near-Far effect conditions. It has further been shown that a combination of PN-Chirp codes and MCR for ultrasonic indoor location systems provide great improvements both for the accuracy and detection performance. It can be considered as another aspect to realize the DS-CDMA. Codes based on MCR provide for brilliant correlation properties, which can never be reached by matched filter, even for short period sequences. This approach can be used not only for ToF estimation in location systems but in any situation that requires perfect correlation properties, especially by short codes.

**Claims**

1. A receiver arrangement for detection of correlation of Code Division Multiple Access (CDMA) receive signals which comprise spread spectrum codes, wherein the receiver arrangement comprises a multi-correlation receiver (MCR) unit which comprises a number of branches, each branch comprising:

   a first Delay-and-Multiply (DAM) module (9; 11) for subjecting a received spread spectrum code signal which includes a code of a spread spectrum code family to a delay and multiply operation to generate a new code sequence from the received code,
   a second DAM module (9; 11) for subjecting a reference code of the spread spectrum code family to the same delay and multiply operation as in the first DAM module,
   a combiner (12) for combining the codes generated by said first and second DAM modules, and
   a correlator (14) which receives the combined signal from the combiner for determining a correlation function thereof;
   wherein the delay operation in each of the number of branches is different from the other branches so that a different new code sequence is generated in each branch, and
   wherein the receiver arrangement further comprises an adder (18) for combining all the correlation functions from all braches.

2. The receiver arrangement of claim 1, wherein the correlation function is an auto correlation function and/or a cross correlation function.

3. The receiver arrangement of claim 2, wherein the spread spectrum code is a Gold code sequence or Gold-chirp code combination of a Gold code family, and wherein the first and second DAM modules (9) are adapted to generate another Gold code of said Gold code family according to $G_{u_{12}}(k) = G(k)G(k-u_1)G(k-u_2)$, with $u_1, u_2 = 1, 2, ... , u_1, u_2 \neq N$, wherein $G_{u12}(k)$ is the new Gold code obtained by multiplying the original Gold code $G(k)$ with its $u_1$ - and $u_2$ -chip delayed version, and $N$ is the sequence period of the code sequence.

4. The receiver arrangement of claim 3, wherein the number of branches of the MCR unit is at least $N+1$ and is such that the whole code family is generated by the entirety of the DAM modules of the different branches.

5. The receiver arrangement of claim 3 or claim 4, wherein said spread spectrum code is a Gold-chirp code combination, and wherein the receiver arrangement further comprises a chirp correlation unit (170) upstream the MRC unit.

6. The receiver arrangement of claim 2, wherein said spread spectrum code is a cubic code sequence of a cubic code family, and the first and second DAM modules (11) of the m-th branch are adapted to generate the new code sequence according to $k_m(n) = s_i(n)s_i^*(n-m)$, with $n = 0,...,p-1$, wherein $k_m(n)$ is the newly obtained sequence, $s_i(n)$ is the $i$ -th sequence of the cubic code family of a size p(p-1), p is the sequence period, and * is a conjugate operation.

7. The receiver arrangement of claim 6, wherein the number of branches of the MCR unit is at least p-1.

8. The receiver arrangement of any of the preceding claims, wherein each branch of said MCR unit further comprises an amplitude scaling unit (16) downstream the DAM module.

9. The receiver arrangement of claim 8, wherein the amplitude scaling unit (16) is connected between the combiner (12) and the correlator (14) of each branch of the receiver arrangement or, alternatively, is connected between the correlator (14) of each branch of the receiver arrangement and the adder (18).

10. The receiver arrangement of any of the preceding claims, further comprising a Successive Interference Cancellation (SIC) feedback loop (173).

11. A method for detecting correlation of Code Division Multiple Access (CDMA) receive signals which comprise spread spectrum codes, comprising the steps of:

receiving a code of a spread spectrum code family;
generating a number of new code sequences from the received code by multiplying the received code with different delayed versions thereof, in parallel;
combining each of the new code sequences with a respective reference code sequence that has been subjected to the same respective delay and multiply operation;
determining an auto correlation function and/or cross correlation function for each of the combined signals; and combining all determined correlation functions.

12. The method of claim 11, wherein the spread spectrum code is a Gold code or Gold-chirp code combination of a Gold code family, and wherein the step of generating a number of new code sequences comprises generating, in parallel, at least $N$ +1 other Gold codes of the same Gold code family according to $G_{u12}(k)=G(k)G(k-u_1)G(k-u_2)$, with $u_1, u_2 = 1, 2, ..., u_1, u_2 \neq N$, wherein $G_{u12}(k)$ is the new Gold code obtained by multiplying the original Gold code $G(k)$ with its $u_1$ - and $u_2$ -chip delayed version, and $N$ is the sequence period of the code sequence.

13. The method of claim 12, wherein said spread spectrum code is a cubic code sequence, and wherein the step of generating a number of new code sequences comprises generating, in parallel, at least p-1 new code sequences according to $k_m(n) = s_i(n)s_i^*(n-m)$, wherein $k_m(n)$ is the newly obtained sequence, $s_i(n)$ is the $i$-th sequence of a code family of a size p(p-1), p is the sequence period, and * is a conjugate operation.

**14.** The method of any of claims 11 to 13, further comprising a step of amplitude scaling for each of the combined signals or for each of the determined correlation functions.

Fig. 1

Fig. 2

Fig. 3

Fig. 4

Fig. 5

Fig. 6

Fig. 7

Fig. 8

Fig. 9

Fig. 10

Fig. 11

Fig. 12

Fig. 13

(a)

(b)

Fig. 14

**Fig. 15**

**Fig. 16**

Fig. 17

Fig. 18

Fig. 19

Fig. 20

Fig. 21

Fig. 22

(a)

(b)

Fig. 23

Fig. 24

Fig. 25

Fig. 26

Fig. 27

Fig. 28

Fig. 29

Fig. 30

Fig. 31

Fig. 32

EP 2 432 132 A1

**EUROPEAN SEARCH REPORT**

Application Number

EP 11 18 1672

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | SURENDRAN K. SHANMUGAM: "Improving GPS L1 C/A Code Correlation Properties Using a Novel Multi-correlator Differential Detection Technique", ION GNSS 2006, 29 September 2006 (2006-09-29), pages 1-10, XP55014301, Fort Worth TX * the whole document * | 1-14 | INV. H04B1/709 |
| A | PEREZ M C ET AL: "Ultrasonic beacon-based Local Positioning System using Loosely Synchronous codes", INTELLIGENT SIGNAL PROCESSING, 2007. WISP 2007. IEEE INTERNATIONAL SYMPOSIUM ON, IEEE, PISCATAWAY, NJ, USA, 3 October 2007 (2007-10-03), pages 1-6, XP031228463, ISBN: 978-1-4244-0829-0 * the whole document * | 1-14 | |
| A | PEREZ M C ET AL: "Efficient Correlator for LS Codes Generated from Orthogonal CSS", IEEE COMMUNICATIONS LETTERS, IEEE SERVICE CENTER, PISCATAWAY, NJ, US, vol. 10, no. 10, 1 October 2008 (2008-10-01), pages 764-766, XP011236169, ISSN: 1089-7798 * the whole document * | 1-14 | TECHNICAL FIELDS SEARCHED (IPC) H04B |

The present search report has been drawn up for all claims

| Place of search | Date of completion of the search | Examiner |
|---|---|---|
| Munich | 3 January 2012 | Bauer, Frédéric |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

34

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **H. MIKE ; W. ANDY.** A novel broadband ultrasonic location system. *Proceedings of UbiComp 2002: 4th International Conference on Ubiquitous Computing,* September 2002, 264-280
- **M. B. PURSLEY ; D. V. SARWATE.** Evaluation of correlation parameters for periodic sequences. *IEEE Trans. Inf. Theory,* 1977, vol. 23 (4), 508-513
- Pseudo random Signal processing. **ZEPERNICK, H. J. ; FINGER A.** Applications of pseudo random signal processing. Wiley-Verlag, 2005, 225-313
- **Y. LU ; A. FINGER.** Ultrasonic Beacon-Based Local Position System Using Broadband PN (Pseudo Noise)-Chirp Codes. *The 9th IASTED International Conference on Wireless and Optical Communications,* 2009
- **D. V. SARWATE ; B. PURSLEY.** Crosscorrelation properties of pseudorandom and related sequences. *Proc. of IEEE,* 1980, 593-619
- Pseudo random Signal processing. **H. J. ZEPERNICK ; A. FINGER.** Applications of pseudo random signal processing. Wiley-Verlag, 2005, 225-313
- **K. SHANMUGAM.** Improving GPS L1 C/A code correlation properties using a novel multi-correlator differential detection technique. *ION GNSS,* 2006